# EUROPEAN PATENT APPLICATION

(11) **EP 1 698 806 A1**
(43) Date of publication of application: **06.09.2006**
(21) Application number: 04793404.7
(22) Date of filing: 29.10.2004
(51) Int. Cl.: F16J 15/32, F16C 33/78, F16C 19/52, G01P 3/487, B60B 35/18

(54) **SEAL DEVICE WITH SENSOR AND ROLLING BEARING DEVICE USING THE SEAL DEVICE**

(30) Priority: 29.10.2003 JP 2003368345; 29.10.2003 JP 2003368346; 29.10.2003 JP 2003368349; 21.07.2004 JP 2004212521
(71) Applicant: JTEKT CORPORATION, Chuo-ku Osaka-shi Osaka 542-8502 (JP); AISIN SEIKI KABUSHIKI KAISHA, Kariya-shi, Aichi-ken 448-8650 (JP); UCHIYAMA MANUFACTURING CORP., Okayama-shi, Okayama 702-8004 (JP)
(72) Inventor: KOYAGI, Katsura, JTEKT Corporation, Osaka-shi, Osaka 542-0082 (JP); NUMATA, Tetsuaki, JTEKT Corporation, Osaka-shi, Osaka 542-0082 (JP); INOUE, Masahiro, JTEKT Corporation, Osaka-shi, Osaka 542-0082 (JP); MATSUI, Shunichi, JTEKT Corporation, Osaka-shi, Osaka 542-0082 (JP); SHIGE, Yoshifumi, JTEKT Corporation, Osaka-shi, Osaka 542-0082 (JP); KUASHIMA, Tooru, JTEKT Corporation, Osaka-shi, Osaka 542-0082 (JP); KIMURA, Masahiro, AISIN SEIKI KABUSHIKI KAISHA, Kariya-shi, Aichi 448-8650 (JP); IWASE, Eiichiro, AISIN SEIKI KABUSHIKI KAISHA, Kariya-shi, Aichi 448-8650 (JP); KAGEYAMA, Takeshi, UCHIYAMA MANUFACTURING CORP., Akaiwa-gun, Okayama 701-2221 (JP)
(74) Representative: Steinmeister, Helmut
(86) International application number: PCT/JP2004/016484
(87) International publication number: WO 2005/040647

(57) **Abstract**

A seal device with sensor (7) is configured by a fixed side seal member (8) fixed to a vehicle body side raceway member (3) and a rotating side seal member (9) fixed to a wheel side raceway member (4). The fixed side seal member (8) includes a core metal (21), a resin member (22) integrated with the core metal (21) through insert molding, a sensor (11) resin molded to the core metal (21), and an elastic seal (65) adhered to the core metal (21). The core metal (21) of the fixed side seal member (8) includes a fitting cylindrical part (61) fitted and fixed to the vehicle body side raceway member (3), a coupling part (62) extending towards the cylindrical part (31) of the rotating side seal member (9) and a moisture entering prevention cylindrical part (65) extending outward in the axial direction in continuation with the coupling part (62), and the outer end part in the axial direction of the fitting cylindrical part (61) is positioned in the resin (22).

## Description

### TECHNICAL FIELD

The present invention relates to a seal device with sensor and a roller bearing device using the same.

### BACKGROUND ART

In automobiles, since various information are necessary to perform control, arranging a sensor device in a hub unit (roller bearing device) including a wheel side raceway member to where a wheel is attached, a vehicle body side raceway member fixed on the vehicle body side, and two columns of rollers arranged between the two raceway members has been proposed.

As such roller bearing device, that including an outer ring, an inner ring, rollers arranged between the rings, and a seal arranged between the ends of both rings, wherein a sensor supporting member arranged with the sensor is attached to the end face of the outer ring, and a ring shaped magnet is fixed on the outer surface in the axial direction of a slinger fixed to the inner ring is disclosed in patent article 1 (Japanese Patent Publication No. 5-26233).

In applying this type of roller bearing device to the hub unit of an automobile, the dimension in the axial direction must be suppressed to less than or equal to a predetermined value, but the ring shaped magnet and the sensor supporting member are projected more in the axial direction than the bearing device in patent article 1 thereby making the application to the hub unit of the automobile difficult.

A sensor can be resin molded to a core metal configuring a seal device to suppress the dimension in the axial direction, but in such case, a gap is created between the resin and the core metal holding the same due to contraction of the resin, whereby the core metal and the resin may separate and moisture may enter inside the bearing from the interface of the core metal and the resin, and thus a countermeasure for such problem is necessary.

### DISCLOSURE OF THE INVENTION

The present invention aims to provide a seal device with sensor in which the sensor is resin molded to the core metal configuring the seal device thereby suppressing the dimension in the axial direction of the seal device with sensor and the roller bearing device and preventing the core metal and the resin from separating and the moisture from entering from the interface of the core metal and the resin, and a roller bearing device using the same.

The seal device with sensor according to the present invention comprises a fixed side seal member including a core metal fitted and fixed to a fixed member and a sensor resin molded to the core metal; and a rotating side seal member including a cylindrical part fitted and fixed to a rotating member and a flange part extending towards the fixed side seal member in continuation with the outer end part in the axial direction of the cylindrical part; the core metal of the fixed side seal member including a fitting cylindrical part fitted and fixed to a fixed member, a coupling part extending towards the cylindrical part of the rotating side seal member in continuation with the inner end part in the axial direction of the cylindrical part, and a moisture entering prevention cylindrical part extending outward in the axial direction in continuation with the coupling part; the outer end part in the axial direction of the fitting cylindrical part insert molded so as to be positioned in the resin, and an elastic seal arranged on at least one of the core metal and the rotating side seal member to slidably contact the other.

The fixed member is an outer ring or an inner ring of a roller bearing and the like, and the rotating member is the inner ring or the outer ring in the roller bearing and the like, but is not limited thereto.

The core metal may be formed by one rigid ring or may be formed by two or more rigid rings. The core metal includes a large diameter cylindrical part and a small diameter cylindrical part irrespective of whether being formed with one rigid ring or being formed with two or more rigid rings, and a resin molded sensor is arranged between the cylindrical parts. For instance, the core metal may be configured by a first rigid ring including a fitting cylindrical part and an inward flange part; and a second rigid ring including a large diameter cylindrical part fitted and fixed to the fitting cylindrical part of the first rigid ring, a flange part contacting the inward flange part of the first rigid ring in continuation with the inner diameter side of the large diameter cylindrical part, and a small diameter cylindrical part continuing with the inner periphery edge of the flange part (coupling part being configured by the inward flange of the first rigid ring and the flange part of the second rigid ring), and may be one rigid ring configured by the large diameter cylindrical part, the small diameter cylindrical part, and the coupling part coupling the two parts.

An elastic seal may be arranged on the flange part of the rotating side seal member and slidably contacted to the moisture entering prevention cylindrical part of the core metal of the fixed side seal member, and may be arranged at the flange part arranged at the outer end part in the axial direction of the moisture entering prevention cylindrical part of the core metal of the fixed side seal member and slidably contacted to the cylindrical part and/or the flange part of the rotating side seal member.

The elastic seal may be arranged not only between the moisture entering prevention cylindrical part of the core metal and the outer end part in the axial direction of the rotating side seal member, but also between the inner end part in the axial direction of the two, as necessary.

The sensor is a magnetic sensor using an MR element or a Hall element, for example, but is not limited thereto. Normally, a pulser facing the magnetic sensor to provide a signal thereto is arranged in the rotating side seal member. The pulser generates a magnetic force by alternately arranging the N pole and the S pole to have the combined sensor output the rotating signal, and is configured by an annular shape supporting member and a magnetized body adhered thereto.

The core metal and the resin are insert molded, wherein the outer end part in the axial direction of the fitting cylindrical part of the core metal is positioned in the resin. That is, the core metal is not closely attached only to the surface of the resin, but the end part of the core metal is inserted inside the resin. The inner end part in the axial direction of the fitting cylindrical part is thereby fitted and fixed to the fixed member.

The pulser arranged in the rotating side seal member is configured by a supporting member including a large diameter cylindrical part, a small diameter cylindrical part, and a coupling part, and a magnetized body arranged in the supporting member so as to face the sensor; and the elastic seal is arranged at the outer end part in the axial direction of the moisture entering prevention cylindrical part of the fixed side seal member and is made to approach to the outer portion in the axial direction of the cylindrical part and the flange part of the rotating side seal member (invention of claim 2 = invention of first configuration).

When a step including an inner portion in the axial direction and an outer portion in the axial direction that is more depressed is formed at the end part of the rotating member (outer diameter of the inner portion in the axial direction > outer diameter of the outer portion in the axial direction when the rotating member is an inner ring, inner diameter of the inner portion in the axial direction < inner diameter of the outer portion in the axial direction when the rotating member is an outer ring);and the cylindrical part of the rotating side seal member is fitted to the outer portion in the axial direction of the step, the supporting member of the pulser configured by the cylindrical supporting member and the magnetized body is fitted to the inner portion in the axial direction of the step of the rotating member, the magnetized body of the pulser is arranged at the supporting member so as to face the sensor, and the elastic seal is arranged on the outer end part in the axial direction of the moisture entering prevention cylindrical part of the core metal of the fixed side seal member and made to approach the rotating side seal member (invention of claim 3 = invention of second configuration).

In the invention of the first and the second configuration, if the fixed side raceway member is the outer ring and the rotating side raceway member is the inner ring, the relationship of inner diameter of fitting part of core metal of fixed member = outer diameter of fitting cylindrical part (large diameter cylindrical part) of core metal > inner diameter of moisture entering prevention cylindrical part (small diameter cylindrical part) of core metal > outer diameter of large diameter cylindrical part of supporting member of pulser > outer diameter of small diameter cylindrical part of supporting member of pulser > inner diameter of cylindrical part of rotating side seal member = outer diameter of fitting part of rotating side seal member of rotating member must be maintained in the invention of the first configuration, and thus bending of the core metal and the supporting member of the pulser becomes difficult if not enough space is reserved between the inner diameter of the fixed member and the outer diameter of the rotating member, and when bent in such state, precision of bending deteriorates thereby degrading the fitting that is the sealability of the fixed member and the core metal. Thus, when the space between the fixed member (outer ring) and the rotating member (inner ring) is small, the invention of the first configuration may not be applied. In the invention of the second configuration, on the other hand, the bending of the supporting member of the pulser is less by once (only one cylindrical part instead of two cylindrical parts of small diameter and large diameter), and accompanied therewith, the relationship of inner diameter of fitting part of core metal of fixed member = outer diameter of fitting cylindrical part of core metal > inner diameter of moisture entering prevention cylindrical part of core metal > outer diameter of supporting member of pulser > inner diameter of supporting member of pulser = outer diameter of fitting part of pulser of rotating member is maintained, whereby the space between the fitting cylindrical part of the core metal and the moisture entering prevention cylindrical part can be made large. Therefore, the bending of core metal is facilitated, and can be easily applied with the invention of the second configuration even if the space between the fixed member (outer ring) and the rotating member (inner ring) is small. Further, the portion where the supporting member of the pulser is fitted of the cylindrical part of the rotating side seal member is not necessary, and thus the cylindrical part of the rotating side seal member is made shorter than that in the first configuration, and is advantageous in terms of ensuring the fitting precision.

In particular, when used as the hub unit for automobiles, the fixed member has the maximum marginal dimension limited by the dimension of the inner diameter of the knuckle for fitting to the outer diameter, and the rotating member has the minimum marginal dimension limited by the outer diameter of the rotating shaft and the specification (capacity, life span etc.) of the bearing. Therefore, since the seal device with sensor may not be able to reserve the space due to the above limitations, the invention of the second configuration is more suitably used.

When the sensor is an IC using the MR element, the dimension is larger compared to the IC using the Hall element, and thus becomes difficult to reserve the space, in which case, the invention of the second configuration is also suitably used.

In the seal device with sensor, the wiring retrieving cut out for passing the wiring connecting the sensor and the signal processing means is preferably arranged at the outer end part in the axial direction of the fitting cylindrical part of the core metal of the fixed side seal member. The cut out may be a pass through hole, and the shape may be a square shape or a circular shape. As described above, since the outer end part in the axial direction of the fitting cylindrical part is positioned in the resin, a space for the wiring connecting the connector arranged on the exterior surface (exposed surface) of the resin and the sensor is reduced. The cut out is arranged at such portion and the wiring is passed through the cut out, whereby the sensor function is ensured without circumventing the wiring.

The fixed side sealing member may include a bulging resin part bulging more outward in the axial direction than the rotating side seal member and extending as an inner diameter extend outward in the axial direction. The shape in which the inner diameter extends outward in the axial direction is typically referred to as a tapered shape (conical shape), but is not limited thereto. Further, the inner diameter does not need to extend outward in the axial direction across the entire region from one end to the other end of the bulging resin part, and may have a portion of the same diameter at the end part of the bulging resin part. The tapered angle in the tapered shape is appropriately selected in a range of greater than 0° (cylindrical surface) and smaller than 90°, but is preferably between 20° and 70°, and more preferably between 30° and 60°.

In the above configuration, the water droplet attached to the bulging resin part moves outward in the axial direction guided by the inner diameter that extends outward at the lower part of the bulging resin part, and drops from the end, and thus a pool part of water droplets does not exist. Therefore, the water droplet pooled at the resin part is prevented from entering between the fixed side seal member and the rotating side seal member.

The resin member for holding the sensor includes a positioning planar end face spaced apart by a predetermined distance outward in the axial direction from the outer end part in the axial direction of the core metal, the outer surface and the inner surface in the radial direction of the planar end face being positioned more inward in the axial direction than the planar end face. The positioning planar end face acts as a pressing surface when fitting and fixing the fixed side seal member to the fixed member. In pressing, the resin between the end face of the core metal and the planar end face of the resin member is deformed, but the deforming amount is managed with satisfactory precision since the deforming amount is suppressed by the core metal. As a result, positioning of the fixed side seal member with respect to the fixed member is performed at satisfactory precision during fitting and fixing, the precision of positioning between the rotating side seal member and the fixed side seal member is enhanced, and the seal performance is easily ensured. Since the outer surface and the inner surface in the radial direction of the planar end face are positioned more inward in the axial direction than the planar end face, only the distance between the end face of the core metal and the planar end face of the resin member needs to be managed, and thus the assembly precision between the fixed member and the fixed side seal member is enhanced in this aspect as well.

When applying the seal device with sensor to the hub unit of an automobile, not only is the sensor device desired to be compact, but also the seal members must be positioned at satisfactory precision. Through insert molding so as to have the outer end part in the axial direction of the fitting cylindrical part positioned in the resin, the resin portion exposed from the core metal is formed, and when attaching the seal device with sensor to the roller bearing, the outer surface in the axial direction of the exposed resin portion acts as the pressing surface of the press fitting jig, and the seal device is positioned as the inner surface in the axial direction of the exposed resin portion contacts the fixed member (e.g., outer ring). Since the surface sink and deflection are likely to form in the resin, and deformation of resin is large in contraction of resin after molding of pressing, the positioning with satisfactory precision becomes difficult at such state. The positioning planar end face is arranged to solve the problem.

A plurality of convex parts may be arranged in a circumferential direction at a predetermined interval on at least one of the outer surface or the inner surface in the axial direction of the resin portion exposed from the core metal instead of arranging the positioning planar end face. By forming a plurality of convex parts on each surface of the resin member, the extent of undulation is suppressed and the positioning precision is enhanced. A connector part for attaching the harness connecting the processing means arranged on the vehicle body side and the sensor is formed in the resin member, and a plurality of convex parts, for example, four (preferably 3 to 10) convex parts are arranged avoiding the connector part. A plurality of convex parts only needs to be arranged on at least one of the outer surface or the inner surface in the axial direction of the resin portion exposed from the core metal, but is preferably arranged on both the outer surface and the inner surface in the axial direction of the resin member, in which case, the convex part on the outer surface in the axial direction becomes the reference surface of pressing when press fitting to the fixed member of the fixed side seal member, and the convex part on the inner surface in the axial direction contacts the outer ring in press fitting to the fixed member of the fixed side seal member thereby preventing further press fitting of the core metal. The positioning precision is enhanced as the convex part of the outer surface in the axial direction acts as the reference surface of pressing in press fitting to the fixed member of the fixed side seal member, and/or the convex part of the inner surface in the axial direction contacts the outer ring in press fitting to the fixed member of the fixed side seal member thereby preventing further press fitting of the core metal.

The seal device with sensor is suitably used in a roller bearing device including a roller bearing configured by a fixed ring serving as a fixed member, a rotating ring serving as a rotating member, and rollers arranged between the rings, and a seal device with sensor integrally arranged on the roller bearing. In this case, the basic configuration of the roller bearing device is a roller bearing device including a fixed ring, a rotating ring, rollers arranged between the rings, a fixed side seal member arranged on the end part of at least the fixed ring, and a rotating side seal member arranged on the rotating ring so as to face the fixed side seal member; wherein the fixed side seal member includes a core metal including a fitting cylindrical part fitted and fixed to the fixed ring, a coupling part extending towards the rotating ring in continuation with the inner end part in the axial direction of the cylindrical part, and a moisture entering prevention cylindrical part extending outward in the axial direction in continuation with the coupling part and a sensor resin molded to the core metal; the rotating side seal member includes a cylindrical part fitted and fixed to the rotating ring and a flange part extending towards the fixed ring in continuation with the outer end part in the axial direction of the cylindrical part; the outer end part in the axial direction of the fitting cylindrical part of the fixed side seal member is insert molded so as to be positioned in the resin, and an elastic seal is arranged on at least one of the core metal and the rotating side seal member to slidably contact the other.

The fixed ring may be an outer ring and the rotating ring may be an inner ring, or the fixed ring may be an inner ring and the rotating ring may be an outer ring.

The roller bearing device is suitably used as a hub unit for an automobile having the fixed ring as a vehicle body side raceway member including an attachment to the vehicle body, and the rotating ring as a wheel side raceway member including a wheel attachment.

According to the seal device with sensor of the present invention, it is configured by a fixed side seal member and a rotating side seal member, the fixed side seal member includes a sensor resin molded to the core metal, and thus the sensor is incorporated in the seal device, and when attaching the sensor to the roller bearing and the like, assembly of the sensor to the roller bearing is facilitated, and the dimension in the axial direction of the roller bearing device with sensor is reduced. Further, due to insert molding so that the outer end part in the axial direction of the fitting cylindrical part is positioned in the resin, the core metal is not detached from the resin due to torque and the like during rotation. Further, since the elastic seal is arranged on either the core metal or the rotating side seal member to slidably contact the other, even if moisture enters from the gap formed at the interface of the core metal and the resin after the fitting cylindrical part of the core metal is fitted and fixed to the fixed side member, the moisture is passed through between the fitting cylindrical part and the resin, and between (the outer surface in the axial direction of) the coupling part and the resin, and is sent outside in the axial direction from between the moisture entering prevention cylindrical part and the resin, and thus the moisture is prevented from entering inside the device attached with the seal device with sensor.

Further, according to the roller bearing device including the seal device with sensor of the present invention, since the sensor is incorporated in the fixed side seal member and the pulser is incorporated in the rotating side seal member, detection of the rotating information becomes possible, assembly of the sensor device for the detection to the roller bearing is facilitated, and the dimension in the axial direction of the roller bearing device with sensor is reduced. Further, through insert molding so as to have the outer end part in the axial direction of the fitting cylindrical part positioned in the resin, the core metal does not detach from the resin due to torque and the like during rotation. Moreover, since the elastic seal is arranged on either the core metal or the rotating side seal member to slidably contact the other, if moisture enters from the gap formed at the interface of the core metal and the resin, the moisture is passed through between the fitting cylindrical part and the resin, and between (the outer surface in the axial direction of) the coupling part and the resin, and is sent outside in the axial direction from between the moisture entering prevention cylindrical part and the resin, and thus the moisture is prevented from entering inside the bearing.

### BRIEF DESCRIPTION OF THE DRAWINGS

Fig. 1 is a longitudinal cross sectional view showing a first embodiment of a seal device with sensor and a roller bearing device according to the present invention;
Fig. 2 is a left side view of the same;
Fig. 3 is an enlarged longitudinal cross sectional view showing the first embodiment of the seal device with sensor according to the present invention;
Fig. 4 is an enlarged longitudinal cross sectional view showing a portion without a sensor of a second embodiment of the seal device with sensor according to the present invention;
Fig. 5 is an enlarged longitudinal cross sectional view showing a portion with a sensor of the second embodiment of the seal device with sensor according to the present invention;
Fig. 6 is a left side view showing a third embodiment of the seal device with sensor according to the present invention;
Fig. 7 is an enlarged longitudinal cross sectional view of the same; and
Fig. 8 is an enlarged longitudinal cross sectional view showing a fourth embodiment of the seal device with sensor according to the present invention.

### BEST MODE FOR CARRYING OUT THE INVENTION

The embodiments of the present invention will now be described with reference to the accompanying drawings.

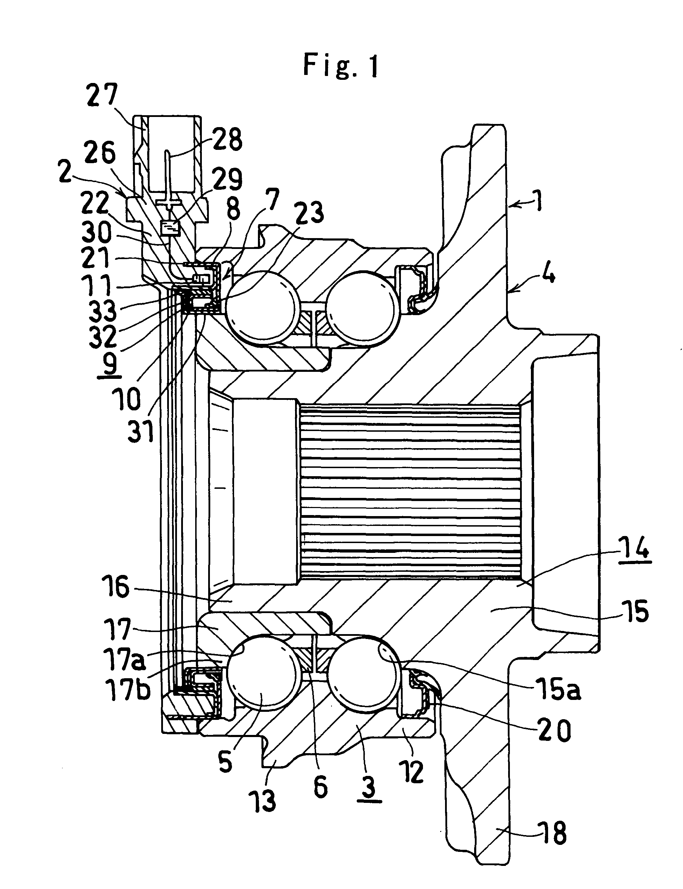

Fig. 1 to Fig. 3 show a first embodiment of a seal device with sensor and a roller bearing device using the same of the present invention. In the following description, left and right corresponds to left and right of Fig. 1. Further, left is the internal side of the vehicle, and right is the external side of the vehicle.

The roller bearing device includes a hub unit (1), a sensor device (2) arranged therein, and a pulser (10) serving as a detected section.

The hub unit (1) includes a vehicle body side raceway member (3) fixed on the vehicle body side, a wheel side raceway member (4) to where a wheel is attached, balls (5) serving as a plurality of rollers arranged in two columns between the members (3), (4), and a holder (6) for holding the ball (5) of each column.

The vehicle body side raceway member (3) includes a cylindrical part (12) with an outer ring (fixed ring) function of the bearing and having two columns of outer ring raceway formed on the inner peripheral surface, and a flange part (13) arranged near the left end part of the cylindrical part (12) and attached to a suspending device (vehicle body) with a bolt.

The wheel side raceway member (4) is configured by a hollow shaft (14) including a large diameter part (15) having a first raceway groove (15a) and a small diameter part (16) having an outer diameter smaller than the diameter of the first raceway groove (15a); and an inner ring (17) fitted and stopped at the outer diameter of the small diameter part (16) of the hollow shaft (14) and having the right surface closely contacting the left surface of the large diameter part (15) of the hollow shaft (14). A serration is arranged on the inner periphery of the hollow shaft (14), and a flange part (18) fixed with a plurality of bolts for attaching the wheel is arranged near the right end of the hollow shaft (14). A raceway groove (17a) is formed in the inner ring (17) so as to be in line with the raceway groove (15a) of the hollow shaft (14), and a shoulder part (17b) is formed at the left part of the inner ring (17). A seal member (20) made of an elastic seal and a core metal is arranged between the right end part of the vehicle body side raceway member (3) and the hollow shaft (14).

A seal device with sensor (7) of the present invention is arranged between the shoulder part (17b) of the inner ring (17) and the left end part of the vehicle body side raceway member (3).

The seal device with sensor (7) includes a fixed side seal member (8) fixed to the vehicle body side raceway member (3) and a rotating side seal member (9) fixed to the wheel side raceway member (4).

The fixed side seal member (8) includes a core metal (21), a resin member (22) integrated with the core metal (21) through insert molding, a sensor (11) resin molded to the core metal (21), and an elastic seal (23) attached to the core metal (21).

The resin member (22) has an annular shape, and the outer diameter of the annular portion is substantially the same as the outer diameter of the left end part of the fixed side raceway member (3). A projection (26) projecting towards the left and outward in the radial direction is arranged at the upper part of the annular portion. A connector part (27) for attaching a harness connecting the processing means arranged on the vehicle body side and the sensor (11) is integrally molded to the upper end part of the projection (26). A signal connector pin (28) is arranged in the connector part (27), and the sensor (11) and the connector pin (28) are connected by way of a joining part (29) and a lead wire (30) (or only lead wire).

The rotating side seal member (9) is configured by a cylindrical part (31) fitted and fixed to the shoulder part (17b) of the inner ring (17) of the wheel side raceway member (4), an outward flange part (32) extending towards the vehicle body side raceway member (3) in continuation with the outer end part (left end part) in the axial direction of the cylindrical part (31), a pulser (10) fixed to the cylindrical part (31), and an elastic seal (33) adhered to the outer peripheral edge of the flange part (32).

The sensor device (2) is configured by the sensor (11), the connector part (27) for retrieving the output of the sensor (11) outside, the connector pin (28), wiring means such as the joining part (29) and the lead wire (30), a signal processing means (not shown) and the like. The sensor (11) is a magnetic sensor, whose sensing surface approaches the outer peripheral surface of the pulser (10) from outward in the radial direction.

In Fig. 1, the sensor (11) is arranged on the upper end part of the vehicle body side raceway member (3), but is not limited thereto, and the sensor (11) may be arranged at the lower end part of the vehicle body side raceway member (3) or any other arbitrary position.

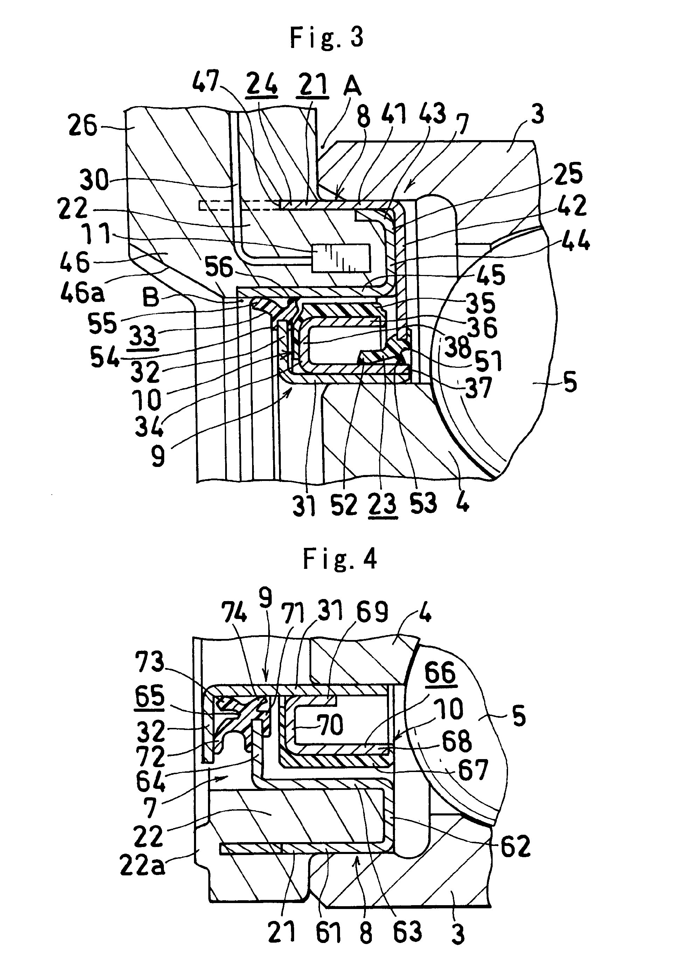

The seal device with sensor (7) will now be described in detail with reference to Fig. 3.

The core metal (21) of the fixed side seal member (8) is configured by first and second rigid rings (24) (25). The first rigid ring (24) is configured by a fitting cylindrical part (41) fitted and fixed to the inner diameter of the left end part of the vehicle body side raceway member (3), and an inward flange part (42) extending towards the wheel side raceway member (4) in continuation with the inner end part (right end part) in the axial direction of the cylindrical part (41). The second rigid ring (25) is configured by a large diameter cylindrical part (43) fitted and fixed to the fitting cylindrical part (41) of the first rigid ring (24), a flange part (44) contacting the inward flange part (42) of the first rigid ring (24) in continuation with the inner diameter side of the large diameter cylindrical part (43), and a moisture entering prevention cylindrical part (45) continued from the inner peripheral edge of the flange part (44). The elastic seal (23) is adhered to the inner peripheral edge of the inward flange part (42) of the first rigid ring (24). The left part of the fitting cylindrical part (41) of the first rigid ring (24) is projected more towards the left than the left end of the vehicle body side raceway member (3), and inserted into the resin member (22). The left end of the large diameter cylindrical part (43) of the second rigid ring (25) is positioned more towards the right than the left end of the vehicle body side raceway member (3). The moisture entering prevention cylindrical part (45) of the second rigid ring (25) is contacted to the inner peripheral surface of the resin member (22), whose left end is positioned more towards the right than the resin member (22). The second rigid ring (25) is made of a non-magnetic metal such as SUS 304 so that the magnetic force lines are easily formed in the detecting surface of the magnetic sensor (11). The first rigid ring (24) may be made of a magnetic material or a non-magnetic material, and the first rigid ring (24) may be made of a magnetic or a non-magnetic stainless steel and the second rigid ring (25) may be made of aluminum.

The pulser (10) is arranged to generate the magnetic force by alternately arranging the N pole and the S pole to have the combined sensor (11) output the rotating signal and is configured by an annular supporting member (34) and a magnetized body (35) attached thereto. The supporting member (34) is made of a metal having magnetic property such as SUS 430. The magnetized body (35) is formed by magnetizing the magnetic powder with rubber as the binder.

The sensor (11) is positioned in the resin (22) filled between the fitting cylindrical part (41) of the first rigid ring (24) acting as the large diameter cylindrical part and the moisture entering prevention cylindrical part (45) of the second rigid ring (25) acting as the small diameter cylindrical part. The resin member (22) includes a bulging resin part (46) bulging more outward in the axial direction than the rotating side seal member (9), and the inner diameter (46a) of the bulging resin part (46) is formed so as to include the inner diameter of the projection (26) and extend outward in the axial direction.

A wiring retrieving cut out (47) of substantially square shape for passing the wiring (30) connecting the sensor (11) and the signal processing means is arranged at the outer end part in the axial direction of the fitting cylindrical part (41) of the core metal (21) of the fixed side seal member (8).

The supporting member (34) of the pulser (10) is configured by a large diameter cylindrical part (36), a small diameter cylindrical part (37) and a coupling part (38), the small diameter cylindrical part (37) press fitted to the outer diameter of the cylindrical part (31) of the rotating side seal member (9). The right end position of the small diameter cylindrical part (37) is in plane with the right end position of the cylindrical part (31) of the rotating side seal member (9) and is positioned slightly more towards the right than the right surface of the inward flange part (42) of the first rigid ring (24) of the fixed side seal member (8), and the right end of the large diameter cylindrical part (36) is positioned so as to form a slight gap with the left surface of the inward flange part (42). The magnetized body (35) is adhered to the outer diameter of the large diameter cylindrical part (36). A bending part adhered to the right end part of the large diameter cylindrical part (36) is arranged on the right edge of the magnetized body (35) and the bending part adhered to the left surface of the coupling part (38) is arranged on the left edge. The gap between the magnetized body (35) and the moisture entering prevention cylindrical part (45) of the second rigid ring (25) takes a smallest possible value in a range they do not contact each other.

The elastic seal (23) of the fixed side seal member (8) has an adhering part (51) of U-shape adhered to the inner peripheral edge of the inward flange part (42), a first radial lip (52) extending towards the left and inward in the radial direction from the bottom surface of the adhering part (51) and slidably contacting the small diameter cylindrical part (37) of the supporting member (34) of the pulser (10), and a second radial lip (53) extending inward in the radial direction from the bottom surface of the adhering part (51) and slidably contacting the small diameter cylindrical part (37) of the supporting member (34) of the pulser (10). The magnetized body (35) and the inner part of the bearing are sealed by the elastic seal (23).

The elastic seal (33) of the rotating side seal member (9) has an adhering part (54) of U-shape fitted and covered by the outer peripheral edge of the outward flange part (32), a first radial lip (55) extending towards the left and outward in the radial direction from the bottom surface of the adhering part (54) and slidably contacting the moisture entering prevention cylindrical part (45), and a second radial lip (56) extending towards the right and inward in the radial direction from the bottom surface of the adhering part (54) and slidably contacting the moisture entering prevention cylindrical part (45).

The core metal (21) and the resin member (22) of the fixed side seal member (8) are integrated through insert molding. A gap easily forms at the interface of the core metal (21) and the resin member (22) due to the contraction of resin during molding, the difference in expansion rate of the metal and the resin, repetition of entering of muddy water and the like, and moisture and the like tends to enter inside the bearing from the position shown with A and B in Fig. 3, thereby raising concern with respect to lowering the bearing function and reducing the life span. According to the seal device with sensor (7) of the present 27 embodiment, the moisture that has entered from the position shown with A in Fig. 3 is prevented and cannot move towards the right by the fitting between the fitting cylindrical part (41) of the core metal (21) and the fixed side raceway member (3), and thus enters towards the left from between the outer periphery of the fitting cylindrical part (41) of the core metal (21) and the resin member (22). As described above, since a gap may form at the interface of the resin member (22) and the core metal (21), the moisture that has entered may pass through the left end and the inner periphery of the fitting cylindrical part (41), the inner periphery of the large diameter cylindrical part (43) of the second rigid ring (25), and the left surface of the flange part (42) and enter to the left end part of the moisture entering prevention cylindrical part (45), but the moisture is prevented from entering inside the bearing since the elastic seal (33) of the rotating side seal member (9) is arranged at the relevant position. The entering of the moisture that has entered from the position shown with B in Fig. 3 to the pulser (10) side is inhibited by the elastic seal (33). Since a gap may also form at the interface between the moisture entering prevention cylindrical part (45) of the second rigid ring (25) and the resin member (22), the moisture that has entered from the position shown with B in Fig. 3 may pass through the outer periphery of the moisture entering prevention cylindrical part (45) of the second rigid ring (25) and the left surface of the flange part (44) and enter the left end part of the large diameter cylindrical part (43), opposite direction to the moisture entering from the position shown with A, but the movement of the moisture towards the right side from the left end part of the large diameter cylindrical part (43) is prevented by the fitting between the fitting cylindrical part (41) of the first rigid ring (24) and the large diameter cylindrical part (43) of the second rigid ring (25) and the entering of moisture into the bearing is prevented. Thus, the moisture is reliably prevented from entering without using an O-ring. Further, since the fitting cylindrical part (41) of the first rigid ring (24) of the fixed side seal member (8) is fitted and fixed to the vehicle body side raceway member (3), the core metal (21) does not slide with respect to the fixed side seal member (8) by the torque involved in the sliding movement of the elastic seal (23) (33), and further, the sliding between the core metal (21) and the resin member (22) is also prevented since insert molding is performed with the left part of the fitting cylindrical part (41) of the first rigid ring (24) of the fixed side seal member (8) inserted into the resin member (22).

When water is spilled over the rotating side seal member (9), the water is extracted outward in the radial direction by the rotation of the rotating side seal member (9), guided and sent to the outside in the axial direction by the inner diameter (46a) that extends outward of the bulging resin part (46) of the resin member (22). The water attached to the fixed side seal member (8) moves to the lower part of the bulging resin part (46) by gravity, moves outward (towards left) in the axial direction guided by the inner diameter (46a) that extends outward of the bulging resin part (46), and drops from the end thereof. A pool of water droplets thus does not form at the lower part of the bulging resin part (46) and the water droplets pooled at the resin part are prevented from entering between the moisture entering prevention cylindrical part (45) of the fixed side seal member (8) and the elastic seal (33) of the rotating side seal member (9).

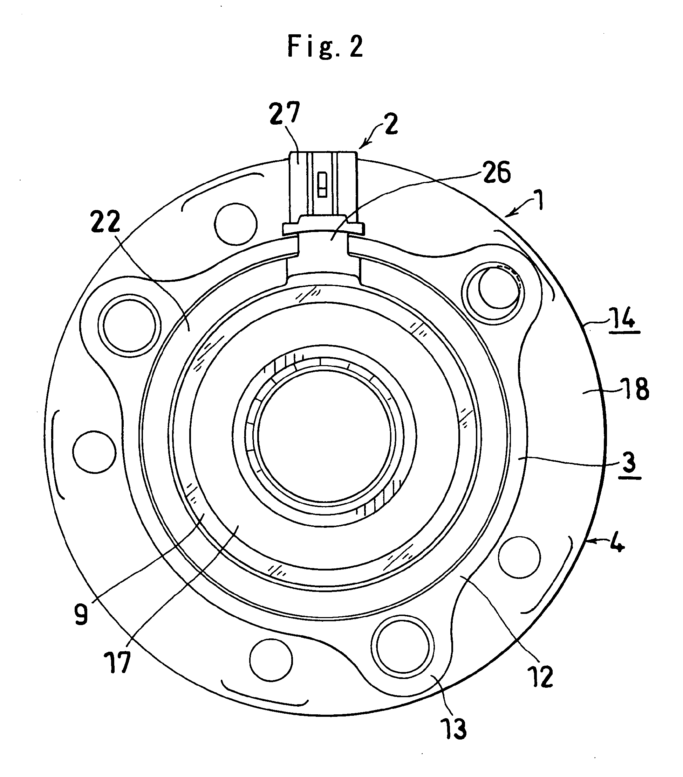

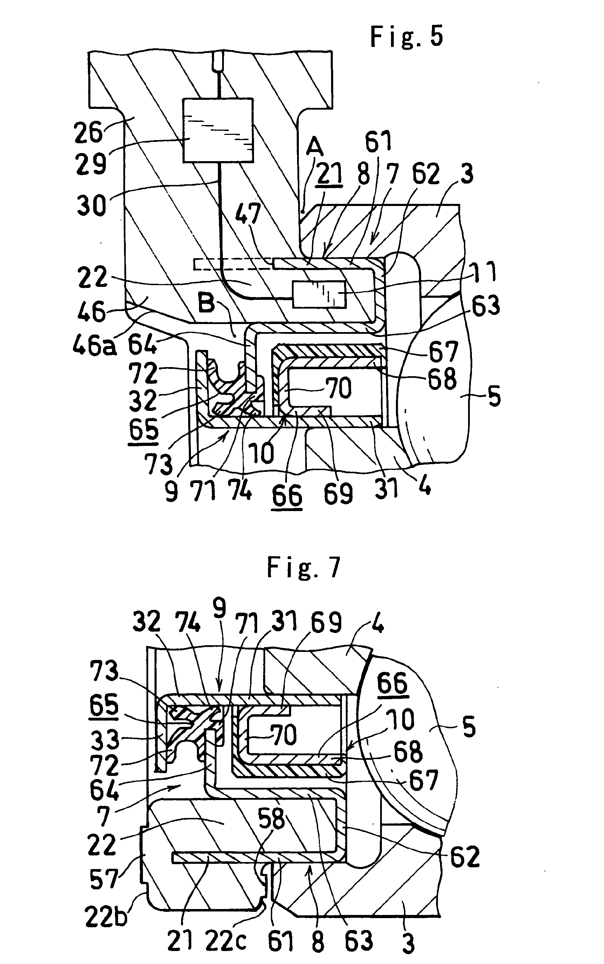

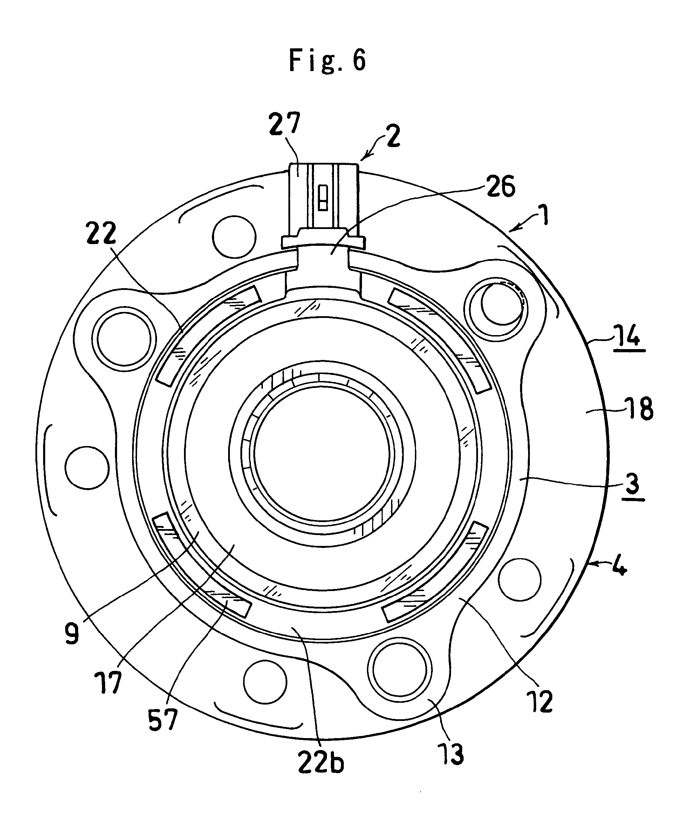

Fig. 4 and Fig. 5 show a second embodiment of the seal device with sensor and the roller bearing device using the same according to the present invention. The seal device with sensor shown in Fig. 4 and Fig. 5 can be replaced and used in place of the seal device with sensor shown in Fig. 1, where Fig. 5 is a view corresponding to Fig. 3 (view of a portion with sensor), and Fig. 4 is a view (view of a portion without sensor) of a location spaced apart by a predetermined distance from Fig. 5. The views corresponding to Fig. 1 and Fig. 2 are omitted in the explanation of the second embodiment, and the same reference characters are denoted for the configuration corresponding to Fig. 1 and Fig. 2, and the explanation thereof is omitted.

In the present embodiment, the core metal (21) of the fixed side seal member (8) is formed with one rigid ring, includes a fitting cylindrical part (61) fitted and fixed to the left end part of the vehicle body side raceway member (3), a coupling part (62) extending inward (direction towards the wheel side raceway member (4)) in continuation with the inner end part (right end part) in the axial direction of the cylindrical part (61), a moisture entering prevention cylindrical part (63) extending outward (towards left) in the axial direction in continuation with the coupling part (62), and an inward flange part (64) extending inward in continuation with the moisture entering prevention cylindrical part (63), and has the elastic seal (65) adhered to the inner peripheral edge of the inward flange part (64). The left part of the fitting cylindrical part (61) is projected more towards the left than the left end of the vehicle body side raceway member (3) and inserted into the resin member (22). The moisture entering prevention cylindrical part (63) is contacted to the inner peripheral surface of the resin member (22), whose left end is positioned more toward the right than the resin member (22). The core metal (21) is made of a non-magnetic metal such as SUS 304 so that the magnetic force lines are easily formed in the detecting surface of the magnetic sensor (11).

The rotating side seal member (9) is configured by a cylindrical part (31) fitted and fixed to the shoulder part (17b) of the inner ring (17) of the wheel side raceway member (4), an outward flange part (32) extending towards the vehicle body side raceway member (3) in continuation with the outer end part (left end part) in the axial direction of the cylindrical part (31), and a pulser (10) fixed to the cylindrical part (31), and does not include an elastic seal. The outward flange part (32) is positioned more outward (towards the left) in the axial direction than in the first embodiment to allow the elastic seal (65) to be accommodated between the inward flange part (64) of the core metal (21) of the fixed side seal member (8).

The pulser (10) is arranged to generate the magnetic force by alternately arranging the N pole and the S pole to have the combined sensor (11) output the rotating signal and is configured by an annular supporting member (66) and a magnetized body (67) attached thereto. The magnetized body is formed by magnetizing the magnetic powder with rubber as the binder.

The sensor (11) is positioned in the resin (22) filled between the fitting cylindrical part (61) acting as the large diameter cylindrical part and the moisture entering prevention cylindrical part (63) acting as the small diameter cylindrical part. The resin member (22) includes a bulging resin part (46) bulging more outward in the axial direction than the rotating side seal member (9), and the inner diameter (46a) of the bulging resin part (46) is formed so as to include the inner diameter of the projection (26) and extend outward in the axial direction.

A wiring retrieving cut out (47) for passing the wiring (30) connecting the sensor (11) and the signal processing means is arranged at the outer end part in the axial direction of the fitting cylindrical part (61) of the core metal (21) of the fixed side seal member (8).

The supporting member (66) of the pulser is configured by a large diameter cylindrical part (68), a small diameter cylindrical part (69), and a coupling part (70), the small diameter cylindrical part (69) press fitted to the outer diameter of the inner portion in the axial direction of the cylindrical part (31) of the rotating side seal member (9). The right end position of the small diameter cylindrical part (69) is in plane with the right end position of the cylindrical part (31) of the rotating side seal member (9), and is positioned slightly more towards the left than the right surface of the flange part (62) of the fixed side seal member (8), and the right end of the large diameter cylindrical part (68) is positioned slightly more towards the left than the right end of the small diameter cylindrical part (69). The magnetized body (67) is adhered to the outer diameter of the large diameter cylindrical part (68). A bending part adhered to the right end part of the large diameter cylindrical part (68) is arranged on the right edge of the magnetized body (67) and the bending part adhered to the left surface of the coupling part (70) is arranged on the left edge. The gap between the magnetized body (67) and the moisture entering prevention cylindrical part (63) takes a smallest possible value in a range they do not contact each other.

The elastic seal (65) has an adhering part (71) of U-shape adhered to the inner peripheral edge of the inward flange part (64), an axial lip (72) extending towards the left from the left surface of the adhering part (71) and slidably contacting the flange part (32) of the rotating side seal member (9), a first radial lip (73) extending towards the left and inward in the radial direction from the bottom surface of the adhering part (71) and slidably contacting the cylindrical part (31) of the rotating side seal member (9), and a second radial lip (74) extending inward in the radial direction from the bottom surface of the adhering part (71) and slidably contacting the outer portion in the axial direction of the cylindrical part (31) of the rotating side seal member (9).

As shown in Fig. 4, the resin member (22) includes a positioning planar end face (22a) spaced apart by a predetermined distance outward (towards left) in the axial direction from the outer end part (left end part) in the axial direction of the fitting cylindrical part (61) of the core metal (21), and the outer surface and inner surface in the radial direction of the planar end face are positioned more inward in the axial direction (towards right, therefore, to be a concave shape with respect to the planar end face) than the planar end face (22a). The positioning planar end face (22a) acts as the pressing surface when fitting and fixing the fixed side seal member (8) to the vehicle body side raceway member (3). In pressing, the resin between the end face of the fitting cylindrical part (61) of the core metal (21) and the planar end face (22a) of the resin member (22) is deformed, but the deforming amount is precisely managed since it is suppressed by core metal (21). As a result, positioning of the fixed side seal member (8) with respect to the vehicle body side raceway member (3) is performed at satisfactory precision, and the positioning precision between the rotating side seal member (9) and the fixed side seal member (8) is enhanced, and sealing performance is easily ensured. Further, since the outer surface and the inner surface in the radial direction of the planar end face (22a) are positioned more inward in the axial direction than the planar end face (22a), only the distance between the end face of the fitting cylindrical part (61) of the core metal (21) and the planar end face (22a) of the resin member (22) needs to be managed and thus the assembly precision can be enhanced in this aspect as well.

The core metal (21) and the resin member (22) of the fixed side seal member (8) are integrated through insert molding. A gap easily forms at the interface of the core metal (21) and the resin member (22) due to contraction of resin during molding, difference in expansion rate of the metal and the resin, repetition of entering of muddy water and the like, and moisture and the like tends to enter inside the bearing from the positions shown with A and B in Fig. 5, thereby raising concern with respect to lowering the bearing function and reducing the life span. According to the seal device with sensor (7) of the present embodiment, the moisture that has entered from the position shown with A in Fig. 5 is prevented and cannot not move towards the right by the fitting between the fitting cylindrical part (61) of the core metal (21) and the fixed side raceway member (3), and thus enters towards the left from between the outer periphery of the fitting cylindrical part (61) of the core metal (21) and the resin member (22). As described above, since a gap may form at the interface of the resin member (22) and the core metal (21), the water that has entered may pass through the left end and the inner periphery of the fitting cylindrical part (61), and the left surface of the coupling part (62), and enter to the left end part of the moisture entering prevention cylindrical part (63), but the moisture is prevented from entering inside the bearing since the elastic seal (65) is arranged at the relevant position. The entering of the moisture that has entered from the position shown with B in Fig. 5 to the pulser (10) side is inhibited by the elastic seal (65). Since a gap may also form at the interface between the moisture entering prevention cylindrical part (63) of the core metal (21) and the resin member (22), the moisture that has entered from the position shown with B in Fig. 5 may pass through the outer periphery of the moisture entering prevention cylindrical part (63) of the core metal (21), the left surface of the coupling part (62) and the left end part the fitting cylindrical part (61), and enter the outer periphery of the fitting cylindrical part (61), but the movement of the moisture towards the right side from the left end part of the fitting cylindrical part (61) is prevented by the fitting between the fitting cylindrical part (61) of the core metal (21) and the fixed side raceway member (3) and the entering of moisture into the bearing is prevented. Thus, the moisture is reliably prevented from entering without using an O-ring. Further, since the fitting cylindrical part (61) of the core metal (21) of the fixed side seal member (8) is fitted and fixed to the vehicle body side raceway member (3), the core metal (21) does not slide with respect to the fixed side seal member (8) by the torque involved in the sliding movement of the elastic seal (65), and further, the sliding between the core metal (21) and the resin member (22) is also prevented since insert molding is performed with the left part of the fitting cylindrical part (61) of the core metal (21) of the fixed side seal member (8) inserted into the resin member (22).

When water is spilled over the rotating side seal member (9), the water is extracted outward in the radial direction by the rotation of the rotating side seal member (9), guided and sent to the outside in the axial direction by the inner diameter (46a) that extends outward of the bulging resin part (46) of the resin member (22). The water attached to the fixed side seal member (8) moves to the lower part of the bulging resin part (46) by gravity, moves outward (towards left) in the axial direction guided by the inner diameter (46a) that extends outward of the bulging resin part (46), and drops from the end thereof. A pool of water droplets thus does not form at the lower part of the bulging resin part (46) and the water droplets pooled at the resin part are prevented from entering between the inner diameter (46a) of the resin member (46) of the fixed side seal member (8) and the outer periphery edge of the flange part (32) of the rotating side seal member (9).

In the second embodiment, the number of rigid rings configuring the core metal (21) is reduced, the elastic seal on the rotating side seal member (9) is omitted, and thus has an advantage of reducing the number of components compared to the first embodiment.

Fig. 6 and Fig. 7 show a third embodiment of the seal device with sensor and the roller bearing device using the same according to the present invention. Fig. 6 corresponds to Fig. 2, Fig. 7 corresponds to Fig. 4, and the same reference characters are denoted for the same configuration, and the explanation thereof is omitted.

As described above, since the outer end part in the axial direction of the fitting cylindrical part (61) of the core metal (21) is insert molded so as to be positioned in the resin, the resin member (22) includes a resin portion exposed from the core metal (21). In the present embodiment, a plurality of (four in the figure) convex parts (57) (58) are arranged in the circumferential direction at a predetermined interval at the outer surface (22b) and the inner surface (22c) in the axial direction of the resin portion exposed from the core metal (21). A plurality of convex parts (57) (58) are integrally formed in the resin member (22) during insert molding so as to be arranged at a position avoiding the connector part (27) for attaching the harness connecting the processing means and the sensor and so as to face each other.

In attaching the seal device with sensor (7) to the hub unit (1), the outer surface (22b) in the axial direction of the exposed resin portion becomes the pressing surface of the press fitting jig and the seal device with sensor (7) is positioned as the inner surface (22c) in the axial direction of the exposed resin portion contacts the vehicle body side raceway member (3). Since surface sink or deflection is likely to occur at the resin, undulation is likely to form at the surfaces (22b) (22c) of the resin member (22). According to the seal device with sensor (7), the extent of undulation is suppressed by forming a plurality of convex parts (57) (58) at the surfaces (22b) (22c) of the resin member (22), and the dimensional tolerance is made small since dimension can be managed between the surfaces of the convex parts (57) (58), and thus the positioning precision is enhanced. Therefore, the sealability is ensured, and the gap of each part is made small, and miniaturization is achieved. The tolerance range between surfaces of the convex parts (57) (58) is appropriately between 0.1 to 0.4mm (±0.05 to ±0.2mm).

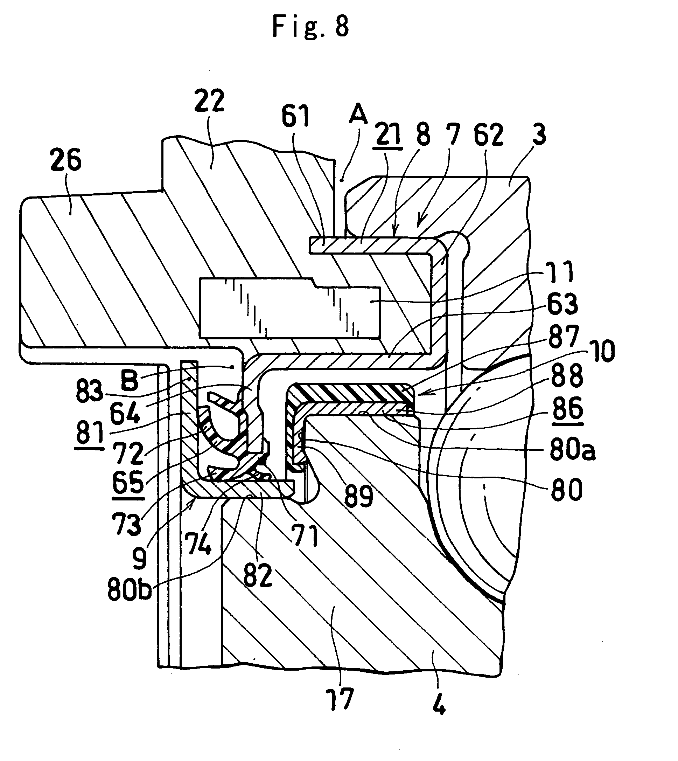

Fig. 8 shows a fourth embodiment of the seal device with sensor and the roller bearing device using the same according to the present invention. The seal device with sensor shown in Fig. 8 can be replaced and used in place of the seal device with sensor shown in Fig. 1, similar to the second embodiment shown in Fig. 4, and only the portion corresponding to Fig. 4 is shown.

The core metal (21) of the fixed side seal member (8) has a shape similar to that of the second embodiment, includes a fitting cylindrical part (61) fitted and fixed to the left end part of the vehicle body side raceway member (3), a coupling part (62) extending inward (direction towards the wheel side raceway member (4)) in continuation with the inner end part (right end part) in the axial direction of the cylindrical part (61), a moisture entering prevention cylindrical part (63) extending outward (towards left) in the axial direction in continuation with the coupling part (62), and an inward flange part (64) extending inward in continuation with the moisture entering prevention cylindrical part (63), and has the elastic seal (65) adhered to the inner peripheral edge of the inward flange part (64). The left part of the fitting cylindrical part (61) is projected more towards the left than the left end of the vehicle body side raceway member (3) and inserted into the resin member (22). The moisture entering prevention cylindrical part (63) is contacted to the inner peripheral surface of the resin member (22) and the left end thereof is positioned more towards the right than the resin member (22).

In the present embodiment, the left end face of the inner ring (17) of the wheel side raceway member (rotating member) (4) is positioned more towards the left compared to the second embodiment, and a step (80) including the inner portion (80a) in the axial direction and the outer portion (80b) in the axial direction more depressed than the inner portion is formed at the shoulder part of the inner ring (17). The outer diameter of the outer portion (80b) in the axial direction is substantially the same as the outer diameter of the shoulder part of the inner ring (17) of the second embodiment, and the outer diameter of the inner portion (80a) in the axial direction is greater than the outer diameter of the shoulder part of the inner ring (17) of the second embodiment.

The rotating side seal member (9) includes a slinger (81) configured by an cylindrical part (82) fitted and fixed to the outer portion (80b) in the axial direction of the step (80) of the wheel side raceway member (4) and an outward flange part (83) extending towards the vehicle body side raceway member (fixed member) (3) in continuation with the outer end part (left end part) in the axial direction of the cylindrical part (82), and a pulser (10). The length in the axial direction of the cylindrical part (82) of the slinger (81) is shorter than the length in the axial direction of the corresponding cylindrical part (31) in the second embodiment by the inner portion (80a) in the axial direction of the step (80) of the wheel side raceway member (4), and the projecting distance from the left end face of the inner ring (17) of the outward flange part (83) of the slinger (81) is smaller than the projecting distance of the outward flange part (32) in the second embodiment. Thus, compared to that in the second embodiment in which the cylindrical part (31) is long, the precision of fitting with the inner ring (17) is easily ensured, and is effective in ensuring sealability.

The pulser (10) is arranged to generate the magnetic force by alternately arranging the N pole and the S pole to have the combined sensor (11) output the rotating signal and is configured by a supporting member (86) and a magnetized body (87) attached thereto, and is directly fixed to the inner ring (17) of the wheel side raceway member (4) instead of the slinger (81) of the rotating side seal member (9). The magnetized body (87) is formed by magnetizing the magnetic powder having the rubber as the binder.

The supporting member (86) of the pulser (10) is configured by a cylindrical part (88) fitted and fixed to the inner portion (80a) of the step (80) of the wheel side raceway member (4), and an inward flange part (89) extending inward (direction away from the vehicle body side raceway member (3)) in continuation with the outer end part (left end part) in the axial direction of the cylindrical part (88). The length in the axial direction of the cylindrical part (69) is substantially the same as the length in the axial direction of the inner portion (80a) in the axial direction of the step (80) and the pulser (10) is positioned by having the inward flange part (89) of the supporting member (86) contact the step surface formed between the inner portion (80a) in the axial direction and the outer portion (80b) in the axial direction of the step (80).

The sensor (11) is positioned in the resin (22) filled between the fitting cylindrical part (61) of the core metal (21) and the moisture entering prevention cylindrical part (63), and the magnetized body (87) of the pulser (10) is arranged on the outer periphery of the cylindrical part (88) of the supporting member (86) so as to face the sensor (11). The magnetized body (87) includes an inward flange part adhered to the outer surface of the inward flange part (89) of the supporting member (86) thereby enhancing the adhesiveness between the magnetized body (87) and the supporting member (86). The gap between the magnetized body (87) and the moisture entering prevention cylindrical part (63) takes a smallest possible value in a range they do not contact each other.

The elastic seal (65) has an adhering part (71) of U-shape adhered to the inner peripheral edge of the inward flange part (64), an axial lip (72) extending towards the left from the left surface of the adhering part (71) and slidably contacting the flange part (83) of the slinger (81), a first radial lip (73) extending towards the left and inward in the radial direction from the bottom surface of the adhering part (71) and slidably contacting the cylindrical part (82) of the slinger (81), and a second radial lip (74) extending inward in the radial direction from the bottom surface of the adhering part (71) and slidably contacting the cylindrical part (82) of the slinger (81). Thus,the elastic seal (65) is arranged on the outer end part in the axial direction of the moisture entering prevention cylindrical part (63) of the fixed side seal member (8) and is made to approach the slinger (81) of the rotating side seal member (9). 45

The core metal (21) and the resin member (22) of the fixed side seal member (8) are integrally formed through insert molding. In this case, a gap easily forms at the interface between the core metal (21) and the resin member (22), and moisture and the like tends to enter inside the bearing from the positions shown with A and B in Fig. 8, but the prevention effect with respect to entering is the same as the second embodiment, and thus the explanation thereof is omitted.

In the forth embodiment, since the supporting member (86) of the pulser (10) is configured by the cylindrical part (88) and the inward flange part (89), the bending of the supporting member (86) of the pulser (10) is less by one compared to the supporting member (34) of the pulser (10) of the second embodiment configured by the large diameter cylindrical part (36), the small diameter cylindrical part (37), and the coupling part (38), and accompanied therewith, a space is easily reserved for arranging the members (8) (9) (10) (11) configuring the seal device with sensor between the left end part of the vehicle body side raceway member (3) and the left end part of the wheel side raceway member (4). Further, since the portion for fitting the supporting member (86) of the pulser (10) is not present in the slinger (81) of the rotating side seal member (9), the length of the cylindrical part (82) is reduced, and the fitting precision is ensured.

The hub unit (1) of each embodiment is shown for the driving wheel in which the serration is arranged in the hollow shaft (14) to allow the shaft part of the constant speed joint to be inserted, but may obviously be for the driven wheel by changing the hollow shaft to the rotating shaft of the driven wheel. Further, the hub unit (1) is given by way of example, but the seal device with sensor (7) may be applied to various roller bearing devices and to various rotating devices for performing relative rotation other than the hub unit (1).

### INDUSTRIAL APPLICABILITY

The seal device with sensor and the roller bearing device using the same according to the present invention can be easily applied to the hub unit of an automobile by resin molding the sensor to the core metal configuring the seal device, thereby suppressing the dimension in the axial direction of the seal device with sensor and the roller bearing device, preventing the entering of moisture, and further, preventing the adverse effect of the core metal on the detection precision of the sensor.

## Claims

1. A seal device with sensor comprising:
a fixed side seal member including a core metal fitted and fixed to a fixed member and a sensor resin molded to the core metal; and
a rotating side seal member including a cylindrical part fitted and fixed to a rotating member and a flange part extending towards the fixed side seal member in continuation with an outer end part in the axial direction of the cylindrical part; wherein
the core metal of the fixed side seal member includes a fitting cylindrical part fitted and fixed to a fixed member, a coupling part extending towards the cylindrical part of the rotating side seal member in continuation with an inner end part in the axial direction of the cylindrical part, and a moisture entering prevention cylindrical part extending outward in the axial direction in continuation with the coupling part;
the outer end part in the axial direction of the fitting cylindrical part is insert molded so as to be positioned in the resin; and
an elastic seal is arranged on at least one of the core metal and the rotating side seal member to slidably contact the other.

2. The seal device with sensor according to claim 1, wherein the rotating side seal member includes a pulser arranged at an inner portion in the axial direction of the cylindrical part, the pulser being configured by a supporting member including a large diameter cylindrical part, a small diameter cylindrical part, and a coupling part, and a magnetized body arranged in the supporting member so as to face the sensor; the elastic seal being arranged at the outer end part in the axial direction of the moisture entering prevention cylindrical part of the fixed side seal member and made to approach the outer portion in the axial direction of the cylindrical part and the flange part of the rotating side seal member.

3. The seal device with sensor according to claim 1, wherein a step including an inner portion in the axial direction and an outer portion in the axial direction that is more depressed is formed at the end part of the rotating member; the cylindrical part of the rotating side seal member is fitted to the outer portion in the axial direction of the step; a supporting member of the pulser configured by a cylindrical supporting member and a magnetized body is fitted to the inner portion in the axial direction of the step of the rotating member, the magnetized body of the pulser is arranged at the supporting member so as to face the sensor, the elastic seal is arranged at the outer end part in the axial direction of the moisture entering prevention cylindrical part of the fixed side seal member and made to approach the rotating side seal member.

4. The seal device with sensor according to any one of claims 1 to 3, wherein a wiring retrieving cut out for passing a wiring connecting the sensor and a signal processing means is arranged at the outer end part in the axial direction of the fitting cylindrical part of the core metal of the fixed side seal member.

5. The seal device with sensor according to claim 1, wherein the fixed side seal member includes a bulging resin part bulging more outward in the axial direction than the rotating side seal member and extending as the inner diameter extend outward in the axial direction.

6. The seal device with sensor according to claim 1, wherein the resin member for holding the sensor includes a positioning planar end face spaced apart by a predetermined distance outward in the axial direction from the outer end part in the axial direction of the core metal, the outer surface and the inner surface in the radial direction of the planar end face being positioned more inward in the axial direction than the planar end face.

7. The seal device with sensor according to claim 1, wherein a plurality of convex parts are arranged in the circumferential direction in a predetermined interval on at least one of the outer surface or the inner surface in the axial direction of the resin portion exposed from the core metal.

8. The seal device with sensor according to claim 7, wherein the plurality of convex parts are arranged on both the outer surface and the inner surface in the axial direction of the resin member, the convex part on the outer surface in the axial direction acting as a reference surface of pressing in press fitting to the fixed member of the fixed side seal member, the convex part on the inner surface in the axial direction contacting the outer ring in press fitting to the fixed member of the fixed side seal member and preventing further press fitting of the core metal.

9. A roller bearing device comprising a roller bearing configured by a fixed ring serving as a fixed member, a rotating ring serving as a rotating member, and rollers arranged between the rings, and a sealing device with sensor integrally arranged with the roller bearing, the sealing device with sensor being the seal device with sensor according to any one of claims 1 to 8.

10. The roller bearing device according to claim 9, wherein the fixed ring is a vehicle body side raceway member including an attachment to the vehicle body, the rotating ring is a wheel side raceway member including a wheel attachment, and the device is used as a hub unit for an automobile.
